(19) Europäisches Patentamt
European Patent Office
Office européen des brevets

(11) EP 3 553 120 B1

(12) EUROPEAN PATENT SPECIFICATION

(45) Date of publication and mention of the grant of the patent:
**25.01.2023 Bulletin 2023/04**

(21) Application number: **19165054.8**

(22) Date of filing: **26.03.2019**

(51) International Patent Classification (IPC):
***C08K 3/04*** *(2006.01)* ***C08K 3/36*** *(2006.01)*
***C08K 5/13*** *(2006.01)* ***C08K 5/3477*** *(2006.01)*
***F16L 11/04*** *(2006.01)* ***C08L 9/02*** *(2006.01)*

(52) Cooperative Patent Classification (CPC):
(C-Sets available)
**C08K 3/04; C08K 3/36; C08K 5/13; C08K 5/3477;**
C08K 3/06 (Cont.)

# (54) RUBBER COMPOSITION FOR MARINE HOSE AND MARINE HOSE

KAUTSCHUKZUSAMMENSETZUNG FÜR MEERESSCHLAUCH UND MEERESSCHLAUCH

COMPOSITION DE CAOUTCHOUC POUR TUYAU MARIN ET TUYAU MARIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2018 JP 2018076042**

(43) Date of publication of application:
**16.10.2019 Bulletin 2019/42**

(73) Proprietor: **The Yokohama Rubber Co., Ltd.**
**Tokyo 105-8685 (JP)**

(72) Inventor: **IKAI, Koichi**
**Hiratsuka City, Kanagawa 254-8601 (JP)**

(74) Representative: **Grünecker Patent- und Rechtsanwälte**
**PartG mbB**
**Leopoldstraße 4**
**80802 München (DE)**

(56) References cited:
**JP-A- 2004 250 696**
**JP-A- 2013 245 224**
**US-A- 4 851 469**
**US-A- 5 068 137**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 553 120 B1

(52) Cooperative Patent Classification (CPC): (Cont.)

C-Sets
**C08K 3/04, C08L 9/02;**
**C08K 3/36, C08L 9/02;**
**C08K 5/13, C08L 9/02;**
**C08K 5/3477, C08L 9/02;**
C08K 3/06, C08L 9/02

## Description

### Technical Field

The present invention relates to a rubber composition for a marine hose and a marine hose.

### Background Art

For example, a marine hose has been conventionally used for connecting an oil tank disposed on land to an oil tanker anchored on sea to transport oil such as crude oil between the oil tank and the oil tanker.

As a method for producing a marine hose, there is, for example, a method for producing a marine hose in which an inner layer rubber sheet is layered on a mandrel in a circumferential direction, molded, and heated with steam to be vulcanized. In the layering the inner layer rubber sheet on the mandrel in the circumferential direction, the inner layer rubber sheet is generally wound around the mandrel while the inner layer rubber sheet partially overlaps with another inner layer rubber sheet for a purpose of prevention of oil leakage and the like.

Patent Literature 1 describes a marine hose including at least a resin layer and an inner surface rubber layer, wherein the resin layer forms an innermost layer. Patent Literature 1 describes a suitable example of a method for producing the marine hose including a method in which a resin layer, an inner surface rubber layer, a reinforcing layer, an intermediate rubber, a buoyant material layer, and a cover rubber layer are layered on a mandrel in this order, and are then vulcanized.

As described above, since the marine hose is used for a fluid containing a large amount of an aroma component, such as crude oil, the marine hose is required to have oil resistance. Therefore, an acrylonitrile-butadiene rubber having excellent oil resistance is generally applied to an innermost layer of the marine hose.

Patent Literature 2 describes as a rubber composition usable for a marine hose and the like, a rubber composition containing a sulfur vulcanizable rubber component (for example, an acrylonitrile-butadiene rubber), a resorcin donor, a methylene donor, and a basic compounding agent, wherein the basic compounding agent is basic silica and calcium hydroxide, a content of the basic silica being the basic compounding agent is from 20 to 40 parts by mass, and a content of the calcium hydroxide being the basic compounding agent is from 1 to 15 parts by mass, with respect to 100 parts by mass of the rubber component.

Patent Literature 3 discloses rubber compositions which are capable of exhibiting superior adhesion and high water resistance in bonding rubbers to brass and to organic fiber cords and also to different rubbers. Such bonding characteristics can be obtained by the use of specified amounts of a selected class of organic sulfur-containing compounds combined with sulfur-curable rubbers.

Patent Literature 4 discloses composite laminates which are designed to exhibit superior resistance to oil and to heat and which are comprised essentially of two different rubbery layers and a fibrous layer interposed therebetween.

Patent Literature 5 discloses a rubber composition for rubber between layers of hoses, which comprises an acrylonitrile-butadiene copolymer rubber.

Patent Literature 6 discloses a rubber composition, which contains a rubber component on which sulfur vulcanization can be applied, a resorcin donor, a methylene donor, and a basic compound agent.

### Citation List

#### Patent Literature

Patent Literature 1: JP 2006-144878 A
Patent Literature 2: JP 6136113 B
Patent Literature 3: US 4851469 A
Patent Literature 4: US 5068137 A
Patent Literature 5: JP 2004-250696 A
Patent Literature 6: JP 2013-245224 A

### Summary of Invention

#### Technical Problem

However, the present inventor has found that when a marine hose is produced by using a rubber composition

containing an acrylonitrile-butadiene rubber as a rubber composition for formation of an innermost layer, a defect such as occurrence of cracking on a surface of the innermost layer may occur.

The present inventor has discovered that a cause of the cracking is air left between sheets of the rubber composition containing an acrylonitrile-butadiene rubber.

In production of a marine hose, an inner layer rubber sheet (simply also referred to as a "sheet") is first layered on a mandrel, as described above. In this case, a space (gap) is formed between the sheets overlapping with each other.

The present inventor has found that when the inner layer rubber sheets are subjected to vulcanization or crosslinking (hereinafter collectively referred to as "vulcanization or the like") while air is left in the space between the inner layer rubber sheets, owing to progression of vulcanization or the like due to an increase in temperature, flowability (flow behavior due to softening and/or thermal expansion) of rubber in an initial stage of vulcanization or the like decreases before removal of the air between the sheets, and the air may be left between the sheets.

It is considered that when vulcanization or the like proceeds with the air left between the sheets, the air expands in an innermost layer subjected to vulcanization or the like, and cracking occurs on a surface of the innermost layer.

Moreover, it is considered that owing to the expansion of the air between the rubber sheets of the innermost layer subjected to vulcanization or the like, adhesiveness between the rubber sheets decreases.

Therefore, the present inventor has considered that before a rubber flow deteriorates owing to accumulation of heat due to vulcanization or the like, the space between the rubber sheets needs to be filled with the rubber, and that as long as the rubber composition for the innermost layer can keep a rubber flowing property for an extended period of time in an initial stage of vulcanization or the like (a temperature at that time is lower than a temperature in a late stage of vulcanization or the like. For example, the temperature in the initial stage of vulcanization or the like can be about 110°C), no air is left between the sheets, and cracking becomes less likely to occur on the surface of the innermost layer, and therefore, the marine hose can be produced stably.

On the other hand, the present inventor has found that even when the rubber composition for the innermost layer can keep the rubber flowing property for an extended period of time in the initial stage of vulcanization or the like, adhesiveness between the sheets may be insufficient (Comparative Example 2).

Thus, an object of the present invention is to provide a rubber composition capable of stably producing a marine hose without leaving air between sheets and having excellent adhesiveness.

Solution to Problem

The present inventor has intensively investigated to achieve the object, and as a result, found that when an inner layer rubber sheet (for example, a rubber composition in Example 1) is subjected to a heating treatment under a condition of 110°C, as long as the heating treatment is performed for not greater than 3 hours, a rate of decrease in an amount of rubber flowing in the inner layer rubber sheet is low, and a rubber flow is favorable, and when the heating treatment is performed for greater than 3 hours, the amount of rubber flowing rapidly decreases.

It is considered that owing to the favorable rubber flow as described above, air between the sheets is removed during softening, thermal expansion, and flowing of the rubber in the initial stage of vulcanization or crosslinking, and the sheets can be integrated.

Moreover, as a result of the integrated sheets, adhesiveness becomes favorable.

Moreover, the present inventor has found that when the inner layer rubber sheet (for example, the rubber composition in Example 1) is subjected to a heat treatment under a condition of 110°C, and is subsequently caused to adhere to another inner layer rubber sheet by vulcanization, as long as the heating treatment is performed for not greater than 3 hours, adhesiveness between the rubber sheets is favorable, and when the heating treatment is performed for greater than 3 hours, the adhesiveness between the rubber sheets rapidly decreases.

To address a problem such as the decrease in the adhesiveness, it is considered that resorcin and hexamethylene tetramine are used for a rubber composition for a marine hose.

However, there is concern for a rubber flowing property of a rubber composition for a marine hose containing resorcin and hexamethylene tetramine that cannot be maintained and decreases in the initial stage of vulcanization or the like.

However, the present inventor has prepared the above-described rubber composition and has evaluated the rubber flowing property, and then the present inventor has found that in the rubber composition as described above, the rubber flowing property is not inhibited.

From the results described above, the present inventor has found that according to a rubber composition including an acrylonitrile-butadiene rubber, carbon black, silica, resorcin, and hexamethylene tetramine and having a rate of decrease in an amount of rubber flowing of a heated rubber composition subjected to a heating treatment under a condition of 110°C for 3 hours with respect to an initial amount of rubber flowing of the rubber composition of not greater than 20 mass%, a marine hose can be produced stably without leaving air between sheets, and excellent adhesiveness can be achieved.

The present invention is based on the findings described above and, specifically, solves the problem described above by the following features.

[1] A rubber composition including an acrylonitrile-butadiene rubber, carbon black, silica, resorcin, and hexamethylene tetramine,

Wherein an acrylonitrile amount of the acrylonitrile-butadiene rubber is not less than 35 mass% and not greater than 48 mass%,
wherein a rate of decrease, defined as

$$(\text{mass\%}) = 100 - [\text{amount of rubber flowing of heated rubber composition/initial amount of rubber flowing of rubber composition}] \times 100;$$

in an amount of rubber flowing of a heated rubber composition, where an amount of rubber flowing of a heated rubber composition is obtained by subjecting the initial rubber composition to a heating treatment under a condition of 110°C for 3 hours, filling a chamber including an orifice of having a diameter of 1.5 mm with 30.0 g or the heated rubber composition, extruding the heated rubber composition from the chamber at a surface pressure of 0.05 MPa under a condition of 148 °C for 10 minutes, and discharging the heated rubber composition from the orifice, and where an initial amount of rubber flowing is an amount (g) of the rubber composition obtained by filling a chamber including an orifice of having a diameter of 1.5 mm with 30.0 g of the rubber composition, extruding the rubber composition from the chamber at a surface pressure of 0.05 MPa under a condition of 148°C for 10 minutes, and discharging the rubber composition from the orifice is not greater than 20 mass %.

[2] The rubber composition according to [1, wherein nitrogen adsorption specific surface area of the carbon black is not less than 20 $m^2/g$ and not greater than 40 $m^2/g$.
[3] The rubber composition according to [1] or [2], wherein a dibutyl phthalate oil absorption number of the carbon black is not less than 20 mL/100 g and not greater than 80 mL/100 g.
[4] The rubber composition according to any one of [1] to [3], wherein a content of the carbon black is not less than 70 parts by mass and not greater than 100 parts by mass, with respect to 100 parts by mass of the acrylonitrile-butadiene rubber.
[5] The rubber composition according to any one of [1] to [4], wherein a content of the resorcin is not less than 1 part by mass and not greater than 5 parts by mass, with respect to 100 parts by mass of the acrylonitrile-butadiene rubber, and a content of the hexamethylene tetramine is not less than 0.2 parts by mass and not greater than 2 parts by mass, with respect to 100 parts by mass of the acrylonitrile-butadiene rubber.
[6] The rubber composition according to any one of [1] to [5], further including sulfur.
[7] The rubber composition according to any one of [1] to [6], wherein the initial amount of rubber flowing is from 19.0 to 26.0 g.
[8] The rubber composition according to any one of [1] to [6], wherein an amount of rubber flowing of the heated rubber composition is from 15.0 to 26.0 g.
[9] The rubber composition according to any one of [1] to [8], wherein a content of the silica is not less than 20 parts by mass and not greater than 40 parts by mass, with respect to 100 parts by mass of the acrylonitrile-butadiene rubber.
[10] The rubber composition according to any one of [1] to [9], forming an innermost layer of a marine hose.
[11] A marine hose formed by using the rubber composition according to any one of [1] to [9].
[12] The marine hose according to [11], including an innermost layer formed by using the rubber composition.

## Advantageous Effects of Invention

A rubber composition for a marine hose of the present invention is capable of stably producing a marine hose without leaving air between sheets, and has excellent adhesiveness.

A marine hose of the present invention has excellent productivity and adhesiveness.

## Description of Embodiments

Embodiments of the present invention are described in detail below.

Note that in the present specification, numerical ranges indicated using " (from)... to ..." include the former number as the lower limit value and the latter number as the upper limit value. For example, "from X to Y" indicates "not less than X and not greater than Y. "

In the present specification, a method for producing each component is not particularly limited unless otherwise specified. Examples thereof include known products.

In the present specification, unless otherwise noted, a single corresponding substance may be used for each component, or a combination of two or more types of corresponding substances may be used for each component. When a component contains two or more types of substances, the content of the component means the total content of the two or more types of substances.

Rubber composition for marine hose

A rubber composition for a marine hose of the present invention (composition of the present invention) is a rubber composition including an acrylonitrile-butadiene rubber, carbon black, silica, resorcin, and hexamethylene tetramine.

A rate of decrease in an amount of rubber flowing of a heated rubber composition subjected to a heating treatment under a condition of 110°C for 3 hours with respect to an initial amount of rubber flowing of the rubber composition is not greater than 20 mass%.

Here, the amount of rubber flowing is an amount (g) of the (initial) rubber composition or the heated rubber composition obtained by filling a chamber including an orifice having a diameter of 1.5 mm with 30.0 g of the (initial) rubber composition or the heated rubber composition, extruding the (initial) rubber composition or the heated rubber composition from the chamber at a surface pressure of 0.05 MPa under a condition of 148°C for 10 minutes, and discharging the (initial) rubber composition or the heated rubber composition from the orifice.

Each of the components contained in the composition according to an embodiment of the present invention will be described in detail below.

Acrylonitrile-butadiene rubber

The acrylonitrile-butadiene rubber (NBR) incorporated in the composition of the present invention is a copolymer of acrylonitrile with butadiene and/or a hydrogenated product thereof.

Acrylonitrile amount

From the perspective of making air less likely to be left between sheets, and/or exhibiting more excellent adhesiveness and excellent oil resistance, the acrylonitrile amount of the acrylonitrile-butadiene rubber is preferably not less than 35 mass%, preferably not less than 40 mass%, and further preferably not less than 43 mass%, with respect to total mass of the acrylonitrile-butadiene rubber.

An upper limit of the acrylonitrile amount is not greater than 48 mass%, from the perspective of exhibiting excellent processability

The acrylonitrile amount (bound acrylonitrile amount) of the acrylonitrile-butadiene rubber can be measured by semimicro-Kjeldahl method in accordance with JIS K6384:2001.

Mooney viscosity

From the perspective of making air less likely to be left between sheets, and/or exhibiting more excellent adhesiveness, the Mooney viscosity of the acrylonitrile-butadiene rubber is preferably from 45 to 85, and more preferably from 45 to 60.

In the present invention, the Mooney viscosity of the acrylonitrile-butadiene rubber can be measured under a condition of 100°C in accordance with JIS K6300-1:2013.

Molecular weight distribution

From the perspective of making air less likely to be left between sheets, and/or exhibiting more excellent adhesiveness, molecular weight distribution (Mw/Mn: weight average molecular weight/number average molecular weight) of the acrylonitrile-butadiene rubber is preferably from 3.5 to 6.0, and more preferably from 5.0 to 6.0.

In the present invention, the weight average molecular weight, the number average molecular weight, and the molecular weight distribution of the acrylonitrile-butadiene rubber can be determined from a value in terms of standard polystyrene based on a measurement value obtained by gel permeation chromatography (GPC) using tetrahydrofuran

as a solvent.

Other rubber

In addition to the NBR, the composition of the present invention can further include a rubber component other than the NBR as a rubber.

Examples of the rubber component include a natural rubber (NR), and a diene rubber such as an isoprene rubber (IR), a butadiene rubber (BR), a 1,2-butadiene rubber, a styrene-butadiene rubber (SBR), a chloroprene rubber (CR), a butyl rubber (IIR), and an ethylene-propylene-diene rubber (EPDM).

Content of NBR

From the perspective of exhibiting excellent oil resistance, a content of the NBR can be from 80 to 100 mass% with respect to all the rubber component.

Carbon black

The carbon black contained in the composition of the present invention is not particularly limited. Examples thereof include known products.

Among these, from the perspective of making air less likely to be left between sheets, and/or exhibiting more excellent adhesiveness and excellent oil resistance, the carbon black is preferably a soft carbon such as Fine Thermal Furnace (FTF)-grade, General Purpose Furnace (GPF)-grade, and Semi-Reinforcing Furnace (SRF)-grade carbon blacks, more preferably an FTF or SRF-grade carbon black, and further preferably an FTF-grade carbon black.

Nitrogen adsorption specific surface area of carbon black

From the perspective of making air less likely to be left between sheets, and/or exhibiting more excellent adhesiveness and excellent oil resistance, nitrogen adsorption specific surface area ($N_2SA$) of the carbon black is preferably not less than 20 $m^2/g$ and not greater than 40 $m^2/g$, and more preferably not less than 20 $m^2/g$ and not greater than 30 $m^2/g$.

The nitrogen adsorption specific surface area of the carbon black can be measured in accordance with JIS K6217-2:2001 "Part 2: Determination of specific surface area - Nitrogen adsorption method - Single-point procedures."

Dibutyl phthalate oil absorption number of carbon black

From the perspective of making air less likely to be left between sheets, and/or exhibiting more excellent adhesiveness and excellent oil resistance, a dibutyl phthalate oil absorption number (DBP oil absorption number) of the carbon black is preferably not less than 20 mL/100 g and not greater than 80 mL/100 g, and more preferably not less than 20 mL/100 g and not greater than 50 mL/100 g.

The dibutyl phthalate oil absorption number (DBP oil absorption number) of the carbon black can be measured in accordance with JIS K 6217-4:2008 "Carbon Black for Rubber Industry - Fundamental Characteristics - Part 4: Determination of Oil Absorption Number (including compressed sample)."

Content of carbon black

From the perspective of making air less likely to be left between sheets, and/or exhibiting more excellent adhesiveness and exhibiting excellent oil resistance or processability, a content of the carbon black is preferably not less than 70 parts by mass and not greater than 100 parts by mass, more preferably not less than 75 parts by mass and not greater than 95 parts by mass, and further preferably not less than 80 parts by mass and less than 90 parts by mass, with respect to 100 parts by mass of the acrylonitrile-butadiene rubber.

Silica

The silica incorporated in the rubber composition of the present invention is not particularly limited. Examples thereof include known products.

Among these, from the perspective of making air less likely to be left between sheets, and/or exhibiting more excellent adhesiveness, and an excellent reinforcing property, the silica is preferably acidic silica having a pH of less than 7.

In the present invention, the pH of the silica can be measured in accordance with JIS K5101-17-2:2004.

Content of silica

From the perspective of making air less likely to be left between sheets, and/or exhibiting more excellent adhesiveness and exhibiting an excellent balance among a reinforcing property, adhesiveness, and processability, a content of the silica is preferably not less than 20 parts by mass and not greater than 40 parts by mass, more preferably not less than 20 parts by mass and not greater than 30 parts by mass, and further preferably no less than 23 parts by mass and less than 28 parts by mass, with respect to 100 parts by mass of the acrylonitrile-butadiene rubber.

Resorcin

The composition of the present invention includes resorcin. The IUPAC name of resorcin is 1,3-benzenediol.
Resorcin can react with hexamethylene tetramine described below to impart adhesiveness to the composition of the present invention.
Moreover, in an initial stage of vulcanization or the like, resorcin and hexamethylene tetramine incorporated in the composition of the present invention do not inhibit a rubber flowing property of the composition of the present invention.
Rather, it is considered that the composition of the present invention contains resorcin and hexamethylene tetramine, and thus, the composition of the present invention can keep a rate of decrease in an amount of rubber flowing within an appropriate range.
It is considered that this is because the composition of the present invention contains resorcin and hexamethylene tetramine, and thus, an initial amount of rubber flowing and/or an amount of rubber flowing of the heated rubber composition can be brought into an appropriate range.

Content of resorcin

From the perspective of being capable of bringing the initial amount of rubber flowing and/or the amount of rubber flowing of the heated rubber composition into an appropriate range, making air less likely to be left between sheets, and/or exhibiting more excellent adhesiveness and excellent oil resistance, a content of the resorcin is preferably not less than 1 part by mass and not greater than 5 parts by mass, and more preferably not less than 1 part by mass and not greater than 3 parts by mass, with respect to 100 parts by mass of the acrylonitrile-butadiene rubber.

Hexamethylene tetramine

The hexamethylene tetramine contained in the composition of the present invention is a compound represented by the following structural formula.

[Chemical Formula 1]

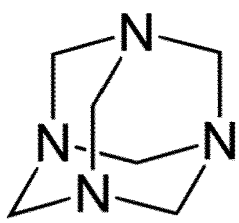

From the perspective of being capable of bringing the initial amount of rubber flowing and/or the amount of rubber flowing of the heated rubber composition into an appropriate range, making air less likely to be left between sheets, and/or exhibiting more excellent adhesiveness and excellent oil resistance, a content of the hexamethylene tetramine is preferably not less than 0.2 parts by mass and not greater than 2 parts by mass, and more preferably not less than 0.5 parts by mass and not greater than 2 parts by mass, with respect to 100 parts by mass of the acrylonitrile-butadiene rubber.

Sulfur

From the perspective of making air less likely to be left between sheets, and/or exhibiting more excellent

adhesiveness and excellent oil resistance, the composition of the present invention preferably further includes sulfur.

The sulfur is not particularly limited. Examples thereof include known products.

Content of sulfur

From the perspective of making air less likely to be left between sheets, and/or exhibiting more excellent adhesiveness and exhibiting excellent oil resistance or physical properties, a content of the sulfur is preferably not less than 1 part by mass and not greater than 3 parts by mass, and more preferably not less than 1 part by mass and not greater than 2 parts by mass, with respect to 100 parts by mass of the acrylonitrile-butadiene rubber.

Additive

The composition of the present invention can further include an additive such as a plasticizer, an anti-aging agent, an antioxidant, an antistatic agent, a flame retardant, a vulcanizing agent other than sulfur, a vulcanization accelerator, an adhesion aid, a vulcanization retardant, and a filler other than carbon black and silica in the range where the additive does not impair the object of the present invention.

As one of preferable aspects, the composition of the present invention does not substantially include an organic peroxide. The organic peroxide means an organic substance having -O-O-.

That the composition of the present invention does not substantially include an organic peroxide means that a content of the organic peroxide is from 0 to 0.1 parts by mass with respect to 100 parts by mass of the NBR.

As one of preferable aspects, the composition of the present invention does not substantially include a fatty acid diester. The fatty acid diester means a diester of a fatty acid having a plurality of carboxylic acids.

That the composition of the present invention does not substantially include a fatty acid diester means that a content of the fatty acid diester is from 0 to 3 parts by mass with respect to 100 parts by mass of the NBR.

A method for producing the composition of the present invention is not particularly limited, and an example thereof includes a method in which each of the above-described components is mixed by using a known method and a known device (such as a Banbury mixer, a kneader, and a roll).

A mixing temperature during production of the composition of the present invention is preferably, for example, from 50 to 120°C.

The composition of the present invention can be vulcanized under conventionally known vulcanizing conditions.

Rate of decrease in amount of rubber flowing

In the composition of the present invention, a rate of decrease in an amount of rubber flowing of a heated rubber composition subjected to a heating treatment under a condition of 110°C for 3 hours with respect to an initial amount of rubber flowing of the rubber composition is not greater than 20 mass%.

In the present invention, the rate of decrease in the amount of rubber flowing of not greater than 20 mass% means that in the initial stage of vulcanization or crosslinking, during softening, thermal expansion, and flowing of the rubber, air is easily removed from between rubber sheets, and a space between the rubber sheets is easily filled with the composition of the present invention, and the sheets may be integrated. As a result, it is considered that when the rubber composition of the present invention is used as a rubber sheet constituting an innermost layer of a marine hose, cracking is less likely to occur in the innermost layer of the marine hose.

The rate of decrease in the amount of rubber flowing can be calculated by the following expression.

Rate of decrease in amount of rubber flowing (mass%) = 100 - [amount of rubber flowing of heated rubber composition/initial amount of rubber flowing of rubber composition] × 100

From the perspective of making air less likely to be left between sheets, and/or exhibiting more excellent adhesiveness, and excellent oil resistance, the rate of decrease in the amount of rubber flowing is preferably from 2 to 20 mass%, more preferably from 5 to 15 mass%, and further preferably from 8 to 14 mass%.

Initial amount of rubber flowing of rubber composition

The initial amount of rubber flowing of the rubber composition is an amount (g) of the rubber composition

obtained by filling a chamber including an orifice having a diameter of 1.5 mm with 30.0 g of the rubber composition (the composition of the present invention), extruding the rubber composition from the chamber at a surface pressure of 0.05 MPa under a condition of 148°C for 10 minutes, and discharging the rubber composition from the orifice.

From the perspective of making air less likely to be left between sheets, and/or exhibiting more excellent adhesiveness, and excellent oil resistance, the initial amount of rubber flowing is preferably from 19.0 to 26.0 g, more preferably from 20.0 to 25.0 g, further preferably from 20.0 to 23.0 g, and particularly preferably from 21.0 to 23.0 g.

Amount of rubber flowing of heated rubber composition

The amount of rubber flowing of the heated rubber composition is an amount (g) of the heated rubber composition obtained by subjecting the initial rubber composition (the rubber composition to be subjected to measurement of the initial amount of rubber flowing) to a heating treatment under a condition of 110°C for 3 hours, filling a chamber including an orifice having a diameter of 1.5 mm with 30.0 g of the heated rubber composition obtained after the heating treatment, extruding the heated rubber composition from the chamber at a surface pressure of 0.05 MPa under a condition of 148°C for 10 minutes, and discharging the heated rubber composition from the orifice.

From the perspective of making air less likely to be left between sheets, and exhibiting more excellent adhesiveness, and excellent oil resistance, the amount of rubber flowing of the heated rubber composition is preferably from 15.0 to 26.0 g, more preferably from 16.0 to 22.0 g, further preferably from 17.0 to 22.0 g, and particularly preferably from 18.0 to 20.0 g.

For marine hose

The composition of the present invention is a rubber composition for a marine hose.

A marine hose can be formed with the composition of the present invention.

The composition of the present invention may be used for any member constituting the marine hose without particular limitation.

In particular, from the perspective of excellent oil resistance of the composition of the present invention, as one of preferable aspects, an innermost layer of the marine hose is formed with the composition of the present invention.

As a method for producing a marine hose formed with the composition of the present invention, for example, a sheet of the composition of the present invention is wound around a mandrel. A method for winding the sheet of the composition of the present invention around the mandrel is not particularly limited. An example thereof includes a method in which the sheet is wound around the mandrel while the sheet partially overlaps with another sheet (for example, in a spiral-like manner). Next, on the sheet of the composition of the present invention, for example, at least one selected from the group consisting of a resin layer, a reinforcing layer, an intermediate rubber layer, a buoyant material layer, and an outermost layer (for example, a cover rubber layer) can be layered. The above-described various layers are not particularly limited. Examples thereof include known products. Moreover, for example, materials and disposition in the marine hose of the various layers are not particularly limited.

The layered structure obtained as described above is subjected to vulcanization or the like, and thus, a marine hose including an innermost layer formed with the composition of the present invention can be produced.

Since a marine hose is generally large, as one of preferable aspects, when the above-described layered structure is subjected to vulcanization or the like, the layered structure is heated, for example, in the range from 100 to 110°C for from 1 to 1.5 hours in the initial stage, and then heated under a condition of from 130 to 147°C to complete vulcanization or the like.

In the marine hose produced as described above by first layering the composition of the present invention (for example, Example 1) on the mandrel, layering other layers as necessary, and subjecting the layered structure to vulcanization or the like, the innermost layer is formed with the composition of the present invention and thus, no air is left between sheets forming the innermost layer (although air is left, an amount of the air is very small). Thus, air between the sheets expands during vulcanization or the like, and the expanded air suppresses a defect such as occurrence of cracking on a surface of the innermost layer, and a marine hose can be produced stably.

Moreover, since the composition of the present invention has excellent adhesiveness, when the composition of the present invention is used as a rubber sheet constituting an innermost layer of a marine hose, the marine hose including the innermost layer having excellent adhesiveness (further, oil resistance due to the adhesiveness) can be produced.

Marine hose

The marine hose of the present invention is a marine hose formed with the rubber composition of the present invention.

The rubber composition used for the marine hose of the present invention is not particularly limited as long as the rubber composition is the rubber composition of the present invention.
The marine hose of the present invention is not particularly limited as long as the marine hose is formed by using the rubber composition.

Innermost layer

As one of preferable aspects, the marine hose of the present invention includes an innermost layer formed by using the rubber composition.
When the innermost layer is formed by using the rubber composition of the present invention, a thickness of the innermost layer is for example, from 1.5 to 8.0 mm.
In addition to the innermost layer, the marine hose of the present invention can further include at least one selected from the group consisting of a reinforcing layer, an intermediate rubber layer, an outermost layer, a resin layer, and a buoyant material layer. The marine hose of the present invention can include one or more reinforcing layers. The marine hose of the present invention can include one or more intermediate rubber layers.
For example, the marine hose of the present invention can include the innermost layer, the reinforcing layer, and the outermost layer in this order.
The marine hose can further include the intermediate rubber layer between the innermost layer and the reinforcing layer or between the reinforcing layer and the outermost layer.
When the marine hose includes a plurality of the reinforcing layers, the marine hose can further include the intermediate rubber layer between the reinforcing layers. When the marine hose of the present invention can include the plurality of reinforcing layers and can include the intermediate rubber layer disposed between the reinforcing layers, examples of a form of the marine hose include innermost layer/[intermediate rubber layer/reinforcing layer]$_n$/intermediate rubber layer/outermost layer. In the above-described form, the marine hose can include n [intermediate rubber layer/reinforcing layer]. For example, n can be from 2 to 10. For example, [intermediate rubber layer/reinforcing layer] means a layered structure of the intermediate rubber layer and the reinforcing layer, or a layer in which the intermediate rubber layer is applied to the reinforcing layer in advance as a coating rubber.

Reinforcing layer

The reinforcing layer that the marine hose of the present invention can further include is not particularly limited.
Examples of a material for the reinforcing layer include a metal and a fiber material (polyamide, polyester, and the like).
The reinforcing layer may be subjected to a surface treatment. Moreover, for example, the reinforcing layer may be a layer in which the intermediate rubber layer is applied to the reinforcing layer in advance as a coating rubber.
Examples of the form of the reinforcing layer include a spiral structure and/or a blade structure obtained by braiding, woven fabric (for example, canvas), and nonwoven fabric.
For example, a thickness of the reinforcing layer (for example, one reinforcing layer) (or a thickness of the reinforcing layer to which a coating rubber is applied in advance) can be from 0.5 to 1.5 mm.

Rubber layer

The intermediate rubber layer that the marine hose of the present invention can further include is not particularly limited.
Examples of a rubber incorporated in the intermediate rubber layer include a natural rubber and/or a synthetic rubber.
For example, a thickness of the intermediate rubber layer can be from 2.0 to 8.0 mm.
When the intermediate rubber layer is formed with the reinforcing layer including a coating rubber applied in advance to one surface or both surfaces, a thickness of the intermediate rubber layer between the reinforcing layers (except for a coating rubber layer) can be, for example, not less than 0.5 mm.

Outermost layer

The outermost layer that the marine hose of the present invention can further include is not particularly limited.
For example, the outermost layer can be a rubber layer.
Examples of a rubber incorporated in the outermost layer include a natural rubber and/or a synthetic rubber.
For example, a thickness of the outermost layer can be from 2.0 to 10.0 mm.

## Marine hose

An internal diameter of the marine hose of the present invention is not particularly limited. For example, the internal diameter can be from 10 to 30 inches.
A length of the marine hose of the present invention is not particularly limited. For example, the length of the marine hose can be from 5 to 20 meters.

## Examples

The present invention is described below in detail using examples but the present invention is not limited to such examples.

## Production of composition

Components shown in Table 1 below were compounded according to composition (part by mass) shown in the same table.
Specifically, the components shown in Table 1 below, except for sulfur, a vulcanization accelerator, and hexamethylene tetramine, were mixed in a 2-L sealed mixer under a condition of 100°C for 5 minutes to obtain a master batch. Next, to the master batch obtained, sulfur, a vulcanization accelerator, and hexamethylene tetramine were added, and the mixture was mixed under a condition of 50°C by an open roll to obtain a composition (initial composition).

## Evaluation

The following evaluations were performed by using the composition produced as described above. The results are shown in Table 1.

### Scorch time

As for each of the compositions obtained as described above, scorch time (ML 5 up) was measured. Here, the scorch time (ML 5 up) indicates time (unit: min) taken to increase Mooney viscosity from the lowest Mooney viscosity (Vm) by 5 M, and M indicates a Mooney unit.
Note that the lowest Mooney viscosity (Vm) indicates the lowest value of Mooney viscosity in a Mooney viscosity-time curve obtained as for each of the rubber compositions obtained by rotating a rotor by using a Mooney viscometer (L-type rotor) under conditions of preheating time of 1 minute and a test temperature of 125°C in accordance with "Mooney Viscosity test" described in JIS K6300-1:2013 (Unvulcanized rubber-Physical property-Part 1: Determination of Mooney viscosity and pre-vulcanization characteristics with Mooney viscometer).
When the scorch time is not less than 15 minutes, a vulcanization rate under the condition of a test temperature of 125°C can be evaluated to be appropriate.

### Hardness

Each of the compositions obtained as described above was vulcanized for 60 minutes at a surface pressure of 3.0 MPa by using a 148°C press molding machine to produce a vulcanized sheet having a thickness of 2 mm.
A dumbbell-shaped JIS No. 3 test piece was punched from the vulcanized rubber sheet.
Durometer hardness of each of the test pieces was measured by a type A durometer under a condition of 23°C in accordance with JIS K 6253-3:2012.

### Oil resistance

Each of the compositions obtained as described above was vulcanized for 60 minutes at a surface pressure of 3.0 MPa by using a 148°C press molding machine to produce a vulcanized sheet having a thickness of 2 mm.
A test piece was produced from the vulcanized sheet in accordance with JIS K6258:2016.

#### Oil resistance 1

Each of the test pieces was immersed in a mixed solution of toluene and isooctane at 50 to 50 (mass ratio) under a condition of 40°C for 48 hours.

Oil resistance 2

Each of the test pieces was immersed in a mixed solution of toluene and isooctane at 30 to 70 (mass ratio) under a condition of 40°C for 48 hours.

As for the oil resistance 1 and the oil resistance 2, volume of each of the test pieces was measured before and after the immersion, and a volume change rate was calculated from the measurement values.

$$\text{Volume change rate (\%)} = [(\text{volume measured after immersion} - \text{volume measured before immersion})/(\text{volume measured before immersion})] \times 100$$

Criteria for evaluation of the oil resistance 1 and the oil resistance 2 are each as follows.

When the volume change rate is less than 40%, the oil resistance is evaluated to be very excellent, and this is represented by "Excellent."

When the volume change rate was not less than 40% and less than 60%, the oil resistance is evaluated to be good, and this is represented by "Good."

When the volume change rate was not less than 60%, the oil resistance is evaluated to be poor, and this is represented by "Poor."

Rubber flowing property

Spider mold

A spider mold (type: ASTM spider mold) was prepared to measure an amount of rubber flowing. The spider mold includes a chamber (preparation portion) including an orifice having a diameter of 1.5 mm. Examples of the spider mold include a spider mold described in JP 2010-65105 A.

Initial amount of rubber flowing

The chamber of the spider mold was filled with 30.0 g of each of the initial compositions obtained as described above.

Next, the composition in the chamber was extruded from the chamber under a condition of 148°C at a surface pressure of 1.5 MPa for 10 minutes, and an amount (g) of the composition discharged from the orifice was measured. This amount is an initial amount of rubber flowing (unit: g).

Heating treatment

The initial compositions obtained as described above were each subjected to a heating treatment under a condition of 110°C for 3 hours to obtain a heated rubber composition.

Amount of rubber flowing obtained after heating treatment (of heated rubber composition)

An amount of rubber flowing (unit: g) of each of the heated rubber compositions obtained as described above was measured in the same manner as the measurement of the initial amount of rubber flowing.

Maintenance factor of amount of rubber flowing

A maintenance factor of an amount of rubber flowing was calculated from the initial amount of rubber flowing and the amount of rubber flowing of the heated rubber compositions obtained as described above.

$$\text{Maintenance factor of amount of rubber flowing (mass\%)} = [\text{amount of rubber flowing of heated rubber composition}/\text{initial amount of rubber flowing}] \times 100$$

In the present invention, when the maintenance factor of the amount of rubber flowing is not less than 80 mass%, a rate of decrease in the amount of rubber flowing of the heated rubber composition with respect to the initial amount of rubber flowing is not less than 20 mass%.
The rate of decrease closer to 0 mass% (the maintenance factor is 100 mass%) indicates that the rubber flowing property can further be maintained over an extended period of time in the initial stage of vulcanization or the like. That is, as the rate of decrease is closer to 0 mass%, air is less likely to be left between sheets, cracking due to the air is less likely to occur in a cured product (rubber) to be obtained, and a marine hose can be produced stably.

Adhesive strength

Initial adhesive strength

Initial sample

The initial compositions obtained as described above were each rolled under a condition of 60°C to produce a sheet-shaped product having a length of 150 mm, a width of 100 mm, and a thickness of 3 mm.
Then, two sheets of the sheet-shaped products were caused to overlap with each other to obtain an initial sample.

Initial vulcanization sample

The initial samples were each vulcanized under conditions of 148°C and a surface pressure (50 kg/cm$^2$) for 60 minutes to obtain an initial vulcanization sample.

Peel test

The initial vulcanization samples obtained as described above were each subjected to a peel test in accordance with JIS 6256-1:2013.
In the peel test, one sheet of the sheet-shaped product in each of the initial vulcanization samples was strained at a tensile speed of 50 mm/minute and at an angle of 180° with respect to another sheet of the sheet-shaped product.
The peel strength obtained is indicated as initial adhesive strength (unit: N/mm).

Adhesive strength after heating treatment

Heating treatment

The initial compositions obtained as described above were each rolled under a condition of 60°C to produce a sheet-shaped product having a length of 150 mm, a width of 100 mm, and a thickness of 3 mm.
Two sheets of the sheet-shaped products were subjected to a heating treatment under a condition of 110°C for 3 hours and were caused to overlap with each other to obtain a heated sample.

Vulcanization

The heated samples obtained as described above were each vulcanized in the same manner as the vulcanization of the initial samples to obtain a heated vulcanization sample.

Peel test

Adhesive strength of the heated vulcanization samples obtained as described above were each measured in the same manner as the measurement of the adhesive strength of the initial vulcanization samples.

Criteria for evaluation of adhesiveness

In the present invention, when the initial adhesive strength is not less than 10.0 N/mm and the adhesive strength obtained after the heating treatment is not less than 9.0 N/mm, the adhesiveness is excellent.

Maintenance factor (of adhesive strength)

A maintenance factor of adhesive strength was calculated from the initial adhesive strength and the adhesive

strength of each of the heated vulcanization samples obtained as described above.

Maintenance factor(%) of adhesive strength = [adhesive strength of heated vulcanization sample/initial adhesive strength] × 100

The maintenance factor of the adhesive strength is preferably not less than 85%.

[Table 1]

| Table 1 | Example | | | | Comparative Example | | | |
|---|---|---|---|---|---|---|---|---|
| | 1 | 2 | 3 | 4 | | 2 | 3 | |
| NBR 1 (AN 44%) | 100 | | | 100 | | 100 | 100 | |
| NBR 2 (AN 41%) | | 100 | | | | | | |
| NBR 3 (AN 33%) | | | 100 | | | | | |
| Carbon black 1 (FTF) | 85 | 85 | 85 | | | 85 | | |
| Carbon black 2 (SRF) | | | | 85 | | | | |
| Carbon black 3 (GPF) | | | | | | | 85 | |
| Silica (acidic) | 25 | 25 | 25 | 25 | | 25 | 25 | |
| Plasticizer | 15 | 15 | 15 | 15 | | 15 | 15 | |
| Zinc oxide | 5 | 5 | 5 | 5 | | 5 | 5 | |
| Stearic acid | 2 | 2 | 2 | 2 | | 2 | 2 | |
| Resorcin | 2 | 2 | 2 | 2 | | | 2 | |
| Hexamethylene tetramine | 1 | 1 | 1 | 1 | | | 1 | |
| Sulfur | 1.5 | 1.5 | 1.5 | 1.5 | | 1.5 | 1.5 | |
| Vulcanization accelerator | 1 | 1 | 1 | 1 | | 1 | 1 | |
| Scorch time (minute) | 18 | 16 | 21 | 19 | | 25 | 15 | |
| Hardness (degree) | 75 | 76 | 72 | 76 | | 72 | 80 | |
| Oil resistance 1 | Excellent | Excellent | Good | Excellent | | Excellent | Excellent | |
| Oil resistance 2 | Excellent | Excellent | Excellent | Excellent | | Excellent | Excellent | |
| Rubber following property | | | | | | | | |
| | Initial amount of rubber flowing (g) | 23 | 20 | 25 | 24 | | 27 | 18 |

(continued)

| | | | | | | | | |
|---|---|---|---|---|---|---|---|---|
| Rubber following property | | | | | | | | |
| | (at 110°C for 3 hours) Amount of rubber flowing of heated rubber composition (g) | 20 | 17 | 21 | 20 | | 24 | 14 |
| | Maintenance factor of amount of rubber flowing (Treatment/ initial × 100, mass%) | 87 | 85 | 84 | 83 | | 89 | 78 |
| | Rate of decrease in amount of rubber flowing (Mass%) | 13 | 15 | 16 | 17 | | 11 | 22 |
| Adhesive strength | | | | | | | | |
| | Initial adhesive strength (N/mm) | 11.3 | 10.9 | 12.8 | 12.2 | | 8.5 | 9.7 |
| | (at 110°C for 3 hours) Adhesive strength obtained after heating treatment (N/mm) | 10.2 | 10.1 | 11.5 | 11.1 | | 8.0 | 7.5 |
| | Maintenance factor of adhesive strength (Treatment/ initial × 100, %) | 90 | 93 | 90 | 91 | | 94 | 77 |

Details of the components described in Table 1 are as follows.

NBR 1 (AN 44%): Nipol DN005 (AN amount: 44 mass%, Mooney viscosity: 50, molecular weight distribution Mw/Mn: 5.4, available from Zeon Corporation)
NBR 2 (AN 41%): Nipol 1041 (AN amount: 41 mass%, Mooney viscosity: 83, molecular weight distribution Mw/Mn: 3.8, available from Zeon Corporation)
NBR 3 (AN 33%): Nipol 1042 (AN amount: 33 mass%, Mooney viscosity: 78, molecular weight distribution Mw/Mn: 4.1, available from Zeon Corporation)
Carbon black 1 (FTF): FTF-grade carbon black (Asahi Thermal available from ASAHI CARBON CO., LTD.), nitrogen adsorption specific surface area: 24 $m^2$/g, dibutyl phthalate oil absorption number: 28 mL/100 g
Carbon black 2 (SRF): SRF-grade carbon black (trade name: Niteron #S available from NSCC Carbon Co., Ltd.), nitrogen adsorption specific surface area: 25 $m^2$/g, dibutyl phthalate oil absorption number: 72 mL/100 g
Carbon black 3 (GPF): GPF-grade carbon black (trade name: SEAST V available from Tokai Carbon Co., Ltd.), nitrogen adsorption specific surface area: 27 $m^2$/g, dibutyl phthalate oil absorption number: 87 mL/100 g

Silica (acidic): $SiO_2$ (pH: 6.4, Nipsil AQ available from Tosoh Silica Corporation)
Plasticizer: dioctyl phthalate (DOP) (available from Mitsubishi Chemical Corporation)
Zinc oxide (vulcanization aid): zinc oxide III (available from Seido Chemical Industry Co., Ltd.)
Stearic acid (vulcanization aid): beads stearic acid (available from NOF Corporation)
Resorcin: resorcinol (available from Sumitomo Chemical Co., Ltd.)
Hexamethylene tetramine: NOCCELER H available from Ouchi Shinko Chemical Industrial Co., Ltd.
Sulfur: sulfur powder (available from Hosoi Chemical Industry Co., Ltd.)
Vulcanization accelerator 1: N-cyclohexyl-2-benzothiazolyl sulfenamide (NOCCELER CZ available from Ouchi Shinko Chemical Industrial Co., Ltd.)

It is considered that in the present invention, the rate of decrease in the amount of rubber flowing of greater than 20 mass% indicates that when the rubber composition is used for a sheet constituting an innermost layer of a marine hose, air is likely to be left between the sheets and cracking is likely to occur in the innermost layer.

In Comparative Example 2 in which resorcin and hexamethylene tetramine were not incorporated, the adhesiveness was low.

In Comparative Example 3, the rate of decrease in the amount of rubber flowing was greater than 20 mass%, and the adhesiveness was low.

In contrast, the rate of decrease in the amount of rubber flowing of the composition of the present invention was not greater than 20 mass%. Therefore, it is considered that in the composition of the present invention, air is less likely to be left between the sheets, cracking is less likely to occur in the innermost layer, and stable productivity of a marine hose is excellent.

Furthermore, the compositions of embodiments of the present invention exhibited excellent adhesion.

It can be understood from comparison between Example 1 and Comparative Example 2 that the composition of the present invention contains resorcin and hexamethylene tetramine, and thus, the adhesive strength increases, and in addition, the amount of rubber flowing decreases, and/or rubber scorch is less likely to occur even when the rubber composition is in the initial stage of vulcanization or the like for an extended period of time.

Examples of marine hose

A marine hose was produced by using the following materials.

Material for innermost layer: a sheet having a width of 30 cm and a thickness of 2.0 mm and obtained by rolling the rubber composition in Example 1 under a condition of 60°C

Material for reinforcing layer: a polyester screen including both faces coated with an NR-based coating rubber (coating rubber containing a natural rubber) in advance (a thickness of the reinforcing layer including the coating rubber: 1.5 mm, a thickness of a layer of the coating rubber on one face of the reinforcing layer: 0.4 mm, a length of the reinforcing layer: 10 m)

Material for outermost layer: a sheet having a width of 30 cm and a thickness of 2.0 mm and obtained by rolling an NR-based cover rubber composition (rubber composition containing a natural rubber) under a condition of 60°C

Method for producing each marine hose

As an innermost layer, each of the sheets having a width of 30 cm and obtained as described above was wound around a mandrel (diameter: 10 inches, length: 10 m) in a spiral-like manner while the sheet overlapped with another sheet by about 10 cm, to form the innermost layer having a thickness of 5 mm (before vulcanization).

Then, on the innermost layer, three sheets of the polyester screens (reinforcing layer) each including both the faces coated with the NR-based coating rubber (intermediate rubber layer) in advance were each wound to form [intermediate rubber layer/reinforcing layer]$_3$/intermediate rubber layer as an intermediate layer.

Finally, on the intermediate layer, as an outermost layer, a sheet of the NR-based cover rubber composition was wound around the mandrel in a spiral-like manner while the sheet partially overlapped with another sheet to form the outermost layer having a thickness of 3 mm (before vulcanization).

The marine hose (before vulcanization) molded to have a caliber of 10 inches and a length of 10 m as described above was placed in a vulcanization can, and vulcanized under a condition of 148°C for 100 minutes.

After the vulcanization, the marine hose was detached from the mandrel to obtain a marine hose.

In Example 5, a marine hose having an innermost layer formed by using the rubber composition in Example 1 was obtained.

In Comparative Example 4, a marine hose having an innermost layer formed by using a rubber composition similar to the one in Example 3, but with 65 mass% of carbon black 1 (FTF) was obtained.

Test method

Both ends of each of the marine hoses produced as described above were closed, and air was removed from the marine hose under a condition of a room temperature by using a vacuum pump. While an internal pressure of the marine hose was maintained to -0.8 bar, the marine hose was left to stand for 10 minutes.

After 10 minutes, the internal pressure of the marine hose was returned to a normal pressure, and the marine hose was observed from the ends to visually confirm an inner surface (surface of the innermost layer) of the marine hose.

As a result, in the innermost layer of the marine hose in Comparative Example 4, a plurality of blisters having diameters of from 5.0 to 20.0 mm were confirmed.

The blisters were cleaved lengthwise by inserting a cutter into the innermost layer, and when a cross section of each of the blisters was observed, a cavity (air) was confirmed in the innermost layer.

As described above, in the marine hose in Comparative Example 4, since the cavity (air) was left in the innermost layer (between the inner layer rubber sheets), the marine hose was not be able to be stably produced. Moreover, since the cavity (air) was left in the innermost layer (between the inner layer rubber sheets), the adhesiveness in the innermost layer can be said to be poor.

Moreover, in the observation of the cross section of each of the blisters, a cavity was also confirmed between the innermost layer and the reinforcing layer (or the intermediate rubber layer).

On the other hand, on a surface of the innermost layer of the marine hose in Example 5, no blister nor cracking occurred and the surface was uniform.

Accordingly, the marine hose of the present invention can have excellent productivity and adhesiveness.

**Claims**

1. A rubber composition for a marine hose comprising an acrylonitrile-butadiene rubber, carbon black, silica, resorcin, and hexamethylene tetramine;

   wherein an acrylonitrile amount of the acrylonitrile-butadiene rubber is not less than 35 mass% and not greater than 48 mass%;
   wherein a rate of decrease, defined as

   (mass%) = 100 - [amount of rubber flowing of heated rubber composition/initial amount of rubber flowing of rubber composition] x 100;

   in an amount of rubber flowing of a heated rubber composition,
   where an amount of rubber flowing of a heated rubber composition is an amount (g) of the heated rubber composition obtained by subjecting the initial rubber composition to a heating treatment under a condition of 110 °C for 3 hours, filling a chamber including an orifice of having a diameter of 1.5 mm with 30.0 g of the heated rubber composition, extruding the heated rubber composition from the chamber at a surface pressure of 0.05 MPa under a condition of 148 °C for 10 minutes, and discharging the heated rubber composition from the orifice, and where an initial amount of rubber flowing is an amount (g) of the rubber composition obtained by filling a chamber including an orifice of having a diameter of 1.5 mm with 30.0 g of the rubber composition, extruding the rubber composition from the chamber at a surface pressure of 0.05 MPa under a condition of 148 °C for 10 minutes, and discharging the rubber composition from the orifice, is not greater than 20 mass%.

2. The rubber composition according to claim 1, wherein nitrogen adsorption specific surface area of the carbon black is not less than 20 $m^2$/g and not greater than 40 $m^2$/g.

3. The rubber composition according to claim 1 or 2, wherein a dibutyl phthalate oil absorption number of the carbon black is not less than 20 mL/100 g and not greater than 80 mL/100 g.

4. The rubber composition according to any one of claims 1 to 3, wherein a content of the carbon black is not less than 70 parts by mass and not greater than 100 parts by mass, with respect to 100 parts by mass of the acrylonitrile-butadiene rubber.

5. The rubber composition according to any one of claims 1 to 4, wherein a content of the resorcin is not less than 1

part by mass and not greater than 5 parts by mass, with respect to 100 parts by mass of the acrylonitrile-butadiene rubber, and a content of the hexamethylene tetramine is not less than 0.2 parts by mass and not greater than 2 parts by mass, with respect to 100 parts by mass of the acrylonitrile-butadiene rubber.

**6.** The rubber composition according to any one of claims 1 to 5, further comprising sulfur.

**7.** The rubber composition according to any one of claims 1 to 6, wherein the initial amount of rubber flowing is from 19.0 to 26.0 g.

**8.** The rubber composition according to any one of claims 1 to 6, wherein an amount of rubber flowing of the heated rubber composition is from 15.0 to 26.0 g.

**9.** The rubber composition according to any one of claims 1 to 8, wherein a content of the silica is not less than 20 parts by mass and not greater than 40 parts by mass, with respect to 100 parts by mass of the acrylonitrile-butadiene rubber.

**10.** The rubber composition according to any one of claims 1 to 9, forming an innermost layer of a marine hose.

**11.** A marine hose formed by using the rubber composition according to any one of claims 1 to 9.

**12.** The marine hose according to claim 11, comprising an innermost layer formed by using the rubber composition.

**Patentansprüche**

**1.** Kautschukzusammensetzung für einen Marineschlauch, die einen Acrylnitril-Butadien-Kautschuk, Ruß, Kieselsäure, Resorcin sowie Hexamethylentetramin umfasst;

wobei eine Menge an Acrylnitril in dem Acrylnitril-Butadien-Kautschuk nicht weniger als 35 Massen-% und nicht mehr als 48 Massen-% beträgt;
wobei eine Verringerungs-Rate, definiert als

(Masse-%) = 100 - [Menge an fließendem Kautschuk in erhitzter Kautschukzusammensetzung/ anfängliche Menge an fließendem Kautschuk in Kautschukzusammensetzung] x 100,

in einer Menge an fließendem Kautschuk in einer erhitzten Kautschukzusammensetzung, nicht mehr als 20 Masse-% beträgt,
wobei eine Menge an fließendem Kautschuk einer erhitzten Kautschukzusammensetzung eine Menge (g) der erhitzten Kautschukzusammensetzung ist, die gewonnen wird, indem die ursprüngliche Kautschukzusammensetzung einer Wärmebehandlung bei 110 °C über 3 Stunden unterzogen wird, eine Kammer, die eine Öffnung mit einem Durchmesser von 1,5 mm enthält, mit 30,0 g der erhitzten Kautschukzusammensetzung gefüllt wird, die erhitzte Kautschukzusammensetzung bei einem Flächendruck von 0,05 Mpa und 148 °C über 10 min aus der Kammer extrudiert wird, und die erhitzte Kautschukzusammensetzung über die Öffnung ausgegeben wird; und eine anfängliche Menge an fließendem Kautschuk eine Menge (g) der Kautschukzusammensetzung ist, die gewonnen wird, indem eine Kammer, die eine Öffnung mit einem Durchmesser von 1,5 mm enthält, mit 30,0 g der Kautschukzusammensetzung gefüllt wird, die Kautschukzusammensetzung bei einem Flächendruck von 0,05 MPa und 148 °C über 10 min aus der Kammer extrudiert wird und die Kautschukzusammensetzung über die Öffnung ausgegeben wird.

**2.** Kautschukzusammensetzung nach Anspruch 1, wobei die spezifische Stickstoffadsorptions-Oberflächenkennzahl (nitrogen adsorption specific surface area) des Rußes nicht weniger als 20 $m^2$/g und nicht mehr als 40 $m^2$/g beträgt.

**3.** Kautschukzusammensetzung nach Anspruch 1 oder 2, wobei eine Dibutylphthalat-Ölabsorptionszahl (dibutyl phthalate oil absorption number) des Rußes nicht weniger als 20 ml/100 g und nicht mehr als 80 ml/100 g beträgt.

**4.** Kautschukzusammensetzung nach einem der Ansprüche 1 bis 3, wobei ein Gehalt an dem Ruß, bezogen auf 100 Massenteile des Acrylnitril-Butadien-Kautschuks, nicht weniger als 70 Massenteile und nicht mehr als 100 Massenteile beträgt.

5. Kautschukzusammensetzung nach einem der Ansprüche 1 bis 4, wobei ein Gehalt an dem Resorcin, bezogen auf 100 Massenteile des Acrylnitril-Butadien-Kautschuks, nicht weniger als 1 Massenteil und nicht mehr als 5 Massenteile beträgt und ein Gehalt an dem Hexamethylentetramin, bezogen auf 100 Massenteile des Acrylnitril-Butadien-Kautschuks, nicht weniger als 0,2 Massenteile und nicht mehr als 2 Massenteile beträgt.

6. Kautschukzusammensetzung nach einem der Ansprüche 1 bis 5, die des Weiteren Schwefel umfasst.

7. Kautschukzusammensetzung nach einem der Ansprüche 1 bis 6, wobei die anfängliche Menge an fließendem Kautschuk 19,0 bis 26,0 g beträgt.

8. Kautschukzusammensetzung nach einem der Ansprüche 1 bis 6, wobei eine Menge an fließendem Kautschuk der erhitzten Kautschukzusammensetzung 15,0 bis 26,0 g beträgt.

9. Kautschukzusammensetzung nach einem der Ansprüche 1 bis 8, wobei ein Gehalt an der Kieselsäure, bezogen auf 100 Massenteile des Acrylnitril-Butadien-Kautschuks, nicht weniger als 20 Massenteile und nicht mehr als 40 Massenteile beträgt.

10. Kautschukzusammensetzung nach einem der Ansprüche 1 bis 9, die eine innerste Schicht eines Marineschlauchs bildet.

11. Marineschlauch, der unter Verwendung der Kautschukzusammensetzung nach einem der Ansprüche 1 bis 9 ausgebildet wird.

12. Marineschlauch nach Anspruch 11, der eine innerste Schicht umfasst, die unter Verwendung der Kautschukzusammensetzung ausgebildet wird.

## Revendications

1. Composition de caoutchouc pour flexible marin comprenant un caoutchouc acrylonitrile-butadiène, du noir de carbone, de la silice, de la résorcine et de l'hexaméthylènetétramine ;

   une quantité d'acrylonitrile du caoutchouc acrylonitrile-butadiène n'étant pas inférieure à 35 % en masse et pas supérieure à 48 % en masse ;
   un taux de diminution, défini comme

   (% en masse) = 100 – [quantité de caoutchouc s'écoulant de composition de caoutchouc chauffée/quantité initiale de caoutchouc s'écoulant de composition de caoutchouc] x 100 ;

   d'une quantité de caoutchouc s'écoulant d'une composition de caoutchouc chauffée,
   où une quantité de caoutchouc s'écoulant d'une composition de caoutchouc chauffée est une quantité (g) de la composition de caoutchouc chauffée obtenue en soumettant la composition de caoutchouc initiale à un traitement de chauffage à 110 °C pendant 3 heures, en remplissant une chambre pourvue d'un orifice ayant un diamètre de 1,5 mm avec 30,0 g de la composition de caoutchouc chauffée, en extrudant la composition de caoutchouc chauffée à partir de la chambre à une pression de surface de 0,05 MPa à 148 °C pendant 10 minutes, et en faisant sortir la composition de caoutchouc chauffée par l'orifice,
   et où une quantité initiale de caoutchouc s'écoulant est une quantité (g) de la composition de caoutchouc obtenue en remplissant une chambre comprenant un orifice ayant un diamètre de 1,5 mm avec 30,0 g de la composition de caoutchouc, en extrudant la composition de caoutchouc chauffée à partir de la chambre à une pression de surface de 0,05 MPa à 148 °C pendant 10 minutes, et en faisant sortir la composition de caoutchouc chauffée par l'orifice,

   n'étant pas supérieur à 20 % en masse.

**2.** Composition de caoutchouc selon la revendication 1, dans laquelle la surface spécifique d'adsorption d'azote du noir de charbon n'est pas inférieure à 20 $m^2/g$ et pas supérieure à 40 $m^2/g$.

**3.** Composition de caoutchouc selon la revendication 1 ou 2, dans laquelle un indice d'absorption d'huile de phtalate de dibutyle du noir de carbone n'est pas inférieur à 20 mL/100 g et pas supérieure à 80 mL/100 g.

**4.** Composition de caoutchouc selon l'une quelconque des revendications 1 à 3, dans laquelle une teneur du noir de carbone n'est pas inférieure à 70 parties en masse et pas supérieure à 100 parties en masse, pour 100 parties en masse du caoutchouc d'acrylonitrile-butadiène.

**5.** Composition de caoutchouc selon l'une quelconque des revendications 1 à 4, dans laquelle une teneur de la résorcine n'est pas inférieure à 1 partie en masse et pas supérieure à 5 parties en masse, pour 100 parties en masse du caoutchouc d'acrylonitrile-butadiène, et une teneur de l'hexaméthylènetétramine n'est pas inférieure à 0,2 partie en masse et pas supérieure à 2 parties en masse, pour 100 parties en masse du caoutchouc d'acrylonitrile-butadiène.

**6.** Composition de caoutchouc selon l'une quelconque des revendications 1 à 5, comprenant en outre du soufre.

**7.** Composition de caoutchouc selon l'une quelconque des revendications 1 à 6, dans laquelle la quantité initiale de caoutchouc s'écoulant va de 19,0 à 26,0 g.

**8.** Composition de caoutchouc selon l'une quelconque des revendications 1 à 6, dans laquelle la quantité initiale de caoutchouc s'écoulant de la composition de caoutchouc chauffée va de 15,0 à 26,0 g.

**9.** Composition de caoutchouc selon l'une quelconque des revendications 1 à 8, dans laquelle une teneur de la silice n'est pas inférieure à 20 parties en masse et pas supérieure à 20 parties en masse, pour 100 parties en masse du caoutchouc d'acrylonitrile-butadiène.

**10.** Composition de caoutchouc selon l'une quelconque des revendications 1 à 9, formant une couche la plus intérieure d'un flexible marin.

**11.** Flexible marin formé en utilisant la composition de caoutchouc selon l'une quelconque des revendications 1 à 9.

**12.** Flexible marin selon la revendication 11, comprenant une couche la plus intérieure formée en utilisant la composition de caoutchouc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006144878 A
- JP 6136113 B
- US 4851469 A
- US 5068137 A
- JP 2004250696 A
- JP 2013245224 A
- JP 2010065105 A